Europäisches Patentamt

European Patent Office

Office européen des brevets

(19)

(11) Veröffentlichungsnummer: **0 236 685 B1**

(12) **EUROPÄISCHE PATENTSCHRIFT**

(45) Veröffentlichungstag der Patentschrift: 04.09.91

(51) Int. Cl.5: **G05D 13/62**

(21) Anmeldenummer: 87100476.8

(22) Anmeldetag: 15.01.87

(54) **Verfahren und Vorrichtung zur Regelung der Drehzahl eines Elektromotors im Vierquadrantenbetrieb.**

(30) Priorität: 11.02.86 CH 544/86

(43) Veröffentlichungstag der Anmeldung:
16.09.87 Patentblatt 87/38

(45) Bekanntmachung des Hinweises auf die
Patenterteilung:
04.09.91 Patentblatt 91/36

(84) Benannte Vertragsstaaten:
**CH DE FR GB IT LI**

(56) Entgegenhaltungen:
**WO-A-84/04635**
**DE-A- 2 125 093**
**DE-A- 3 000 695**
**US-A- 3 810 251**
**US-A- 3 944 901**

**PROCEEDINGS OF THE FIRST EUROPEAN
CONFERENCE ON ELECTRICAL
DRIVES/MOTORS/CONTROLS'82, 29. Juni - 1.
Juli 1982, Leeds, GB, Seiten 38-50; J.M. STE-
PHENSON: "Thyristor fed D.C. drives"**

(73) Patentinhaber: **STUDER REVOX AG**
**Althardstrasse 30**
**CH-8105 Regensdorf ZH(CH)**

(72) Erfinder: **Heinz, Kurt**
**Ringstrasse 27**
**CH-8107 Buchs ZH(CH)**
Erfinder: **Felber, Johannes**
**Breitistrasse 7**
**CH-8953 Dietikon ZH(CH)**

Rank Xerox (UK) Business Services

**Beschreibung**

Die Erfindung betrifft ein Verfahren und eine Vorrichtung zur Regelung der Drehzahl eines Elektromotors im Vierquadrantenbetrieb, wobei dem Elektromotor ueber eine vorgeschaltete Regeleinheit variable Leistung zugefuehrt wird.

Zur Regelung der Drehzahl eines fuer Vierquadrantenbetrieb vorgesehenen Elektromotors ist es ueblich, vom Elektromotor zwei Tachometerinformationen abzuleiten und diese mit vorgegebenen Sollwerten zu vergleichen. Abweichungen zwischen den abgeleiteten Tachoinformationen und den Sollwerten fuehren zu an sich bekannten Eingriffen in den Regelkreis. Als Tachoinformationen sind zwei Signale ueblich, deren Groesse proportional zur Drehzahl des Elektromotors ist. Aus diesen beiden Signalen kann auch die Drehrichtung abgeleitet werden. Auf diese Weise ist eine sichere Regelung des Elektromotors moeglich, so dass keine Betriebszustaende auftreten, die zu unzweckmaessigen Regeleingriffen fuehren.

Der Nachteil dieser an sich bekannten Regelung besteht darin, dass bei Elektromotoren, die so geregelt werden sollen, dass eine bestimmte Drehzahl mit grosser Genauigkeit eingehalten wird, die benoetigten Tachometer zur Ableitung der beiden Tachometerinformation (Drehzahl und Richtung) aufwendig und sehr teuer sind. Des bekannterweise umso mehr, desto hoeher die geforderte Genauigkeit ist.

Aus der US-Patentschrift Nr 3,944,901 ist eine Schaltung zur Stabilisierung der Geschwindigkeit eines Gleichstrommotors bekannt. Der Gleichstrommotor ist einerseits mit einem Tachometer und andererseits mit einem Verstaerker zur Steuerung des Gleichstrommotors verbunden. Zwischen dem Ausgang des Tachometers und dem Eingang des Verstaerkers ist ein Resonanzkreis zwischengeschaltet, der einerseits Stoerfrequenzen im Ausgangssignal des Tachometers unterdrueckt und der andererseits das Ausgangssignal des Tachometers verstaerkt.

Der Nachteil dieser Schaltung besteht darin, dass sie sich nicht fuer die Regelung der Drehzahl des Gleichstrommotors in einem breiten Geschwindigkeitsbereich eignet. Dies, weil der Resonanzkreis nur fuer eine Frequenz ausgelegt werden kann. Soll ein Betrieb in mehreren Quadranten moeglich sein, so benoetigt diese Schaltung auch ein Tachometersignal das die Drehrichtung angibt.

Aus der DE-A-2 125 093 ist ein Verfahren und eine Einrichtung zur Erzeugung eines elektrischen Regelsignals bekannt, bei dem fuer eine zu steuernde Groesse wie z.B. eine Drehzahl ein Normalbereich vorgegeben wird. Befindet sich die zu steuernde Groesse in diesem Normalbereich, so wird kein Regelsignal erzeugt. Befindet sich die zu steuernde Groesse ausserhalb dieses Normalbereiches, so wird ein Regelsignal erzeugt.

Der Nachteil dieses Verfahrens besteht darin, dass es sich nur fuer einen Einquadrantenbetrieb eignet. Wird dieses Verfahren entsprechend fuer Vierquadrantenbetrieb erweitert, so werden zwei Regelsignale benoetigt. Damit wird dieses Verfahren kompliziert und eine Vorrichtung zur Durchfuehrung dieses Verfahrens wird dementsprechend aufwendig.

Die Erfindung wie sie in den Patentanspruechen gekennzeichnet ist, loest die Aufgabe ein Verfahren und eine Vorrichtung zur Regelung eines Elektromotors im Vierquadrantenbetrieb zu schaffen, die billiger sind und die trotzdem eine Regelung der Drehzahl mit hoher Funktionssicherheit und hoher Genauigkeit gewaehrleisten.

Die durch die Vorrichtung erreichten Vorteile sind insbesondere darin zu sehen, dass vom Elektromotor nur noch eine einzige Tachometerinformation fuer die Drehzahl abgeleitet werden muss. Die besondere Ausgestaltung dieses Verfahrens und dieser Vorrichtung lassen es dabei trotzdem nicht zu, dass unkontrollierbare Zustaende im Regelkreis auffreten koennen. Die Vorgaenge im Regelkreis sind somit unter allen Umstaenden eindeutig. Zudem ist die Reaktionszeit bei stoerenden Eingriffen in den Regelkeis von aussen genuegend kurz, so dass Schaeden in den vom Elektromotor angetriebenen Systemen vermieden werden koennen. Ein Vierquadrantenbetrieb des Elektromotors ist somit auch nur mit einer Tachometerinformation moeglich. Diese Vorrichtung ist zur Regelung von Elektromotoren fuer Plattenspieler und fuer Capstanwellen gut geeignet.

Im folgenden wird die Erfindung anhand von lediglich einen Ausfuehrungsweg darstellenden Zeichnungen naeher erlaeutert. Es zeigt

Figur 1 in schematischer Darstellung eine erfindungsgemaesse Vorrichtung zur Regelung eines Elektromotors,

Figur 2 eine Darstellung eines Signales fuer die Regelung und

Figur 3 eine schematische Darstellung der moeglichen Betriebszustaende der Vorrichtung.

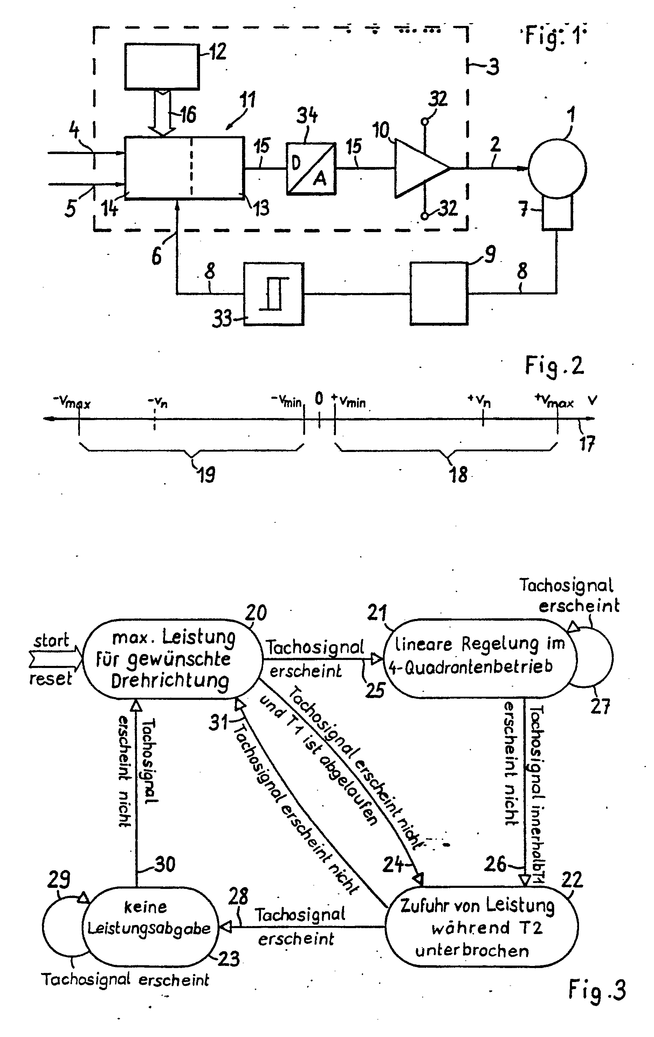

Figur 1 zeigt eine erfindungsgemaesse Vorrichtung zur Regelung eines Elektromotors 1, der beispielsweise als Gleichstrommotor ausgebildet ist. Dem Elektromotor 1 vorgeschaltet und ueber eine oder mehrere Leitungen 2 damit verbunden ist eine Regeleinheit 3. Diese weist einen Eingang 4 fuer ein Drehzahlreferenzsignal, einen Eingang 5 fuer ein Richtungsreferenzsignal und einen Eingang 6 fuer ein Signal aus einer Tachometereinheit 7 auf, welche mit dem Elektromotor 1 verbunden oder gar Teil davon ist. Eine Leitung 8 verbindet die Tachometereinheit 7 mit dem Eingang 6 der Regeleinheit 3. In die Leitung 8 ist weiter ein Bandpassfilter 9 und als Impulsformer beispielsweise ein Schmitt-Trigger 33 eingesetzt. Die Regeleinheit 3 besteht im wesentlichen aus einem Leistungsverstaerker 10, einem Prozessor 11 und einer Eingabeeinheit 12. Der Prozessor 11 weist einen Rechner 13 und einen Speicher 14 auf und ist ueber eine Leitung 15 mit dem Leistungsverstaerker 10 verbunden, der andererseits wiederum mit der Leitung 2 verbunden ist. In die Leitung 15 ist vorzugsweise ebenfalls ein Digital-Analog-Wandler 34 eingesetzt, sofern er nicht bereits im Prozessor 11 eingebaut ist. Der Leistungsverstaerker 10 ist ein an sich bekanntes und deshalb hier nicht naeher beschriebenes Bauelement. Er weist Anschluesse 32 fuer eine externe Speisung auf. Der Prozessor 11 ist ebenfalls ein an sich bekanntes und auf dem Markt erhaeltliches Bauelement (beispielsweise Typ 8051). Die Eingabeeinheit 12 ist ueber einen Bus 16 mit dem Prozessor 11 verbunden. Leitungen 4, 5 und/oder der Bus 16 fuehren Eingangs-und Referenzsignale dem Prozessor 11 zu.

Figur 2 zeigt eine Achse 17 laengs welcher Werte v fuer Drehzahlen des Elektromotors 1 eingetragen sind. Rechts vom 0-Punkt sind Werte fuer Drehzahlen in der einen Drehrichtung als positive Werte und links vom 0-Punkt sind Werte fuer Drehzahlen in der anderen Drehrichtung als negative Werte aufgetragen. Mit vn ist beispielsweise eine durch die Regelung anzustrebende Nenndrehzahl eingetragen. Zwischen Werten +vmin und +vmax sowie -vmin und -vmax sind zulaessige Bereiche 18 und 19 fuer die Groesse des Signales das in diesem Beispiel einer Drehzahl entspricht abgegrenzt. Die Bereiche 18 und 19 werden durch die Wahl der Grenzfrequenzen bei der Auslegung des Bandpassfilters 9 bestimmt.

Figur 3 zeigt eine schematische Darstellung von Zustaenden, welche die Regelung einnehmen kann. Dies sind in diesem Falle vier verschiedene Zustaende 20, 21, 22 und 23. Jeder dieser Zustaende in denen sich die erfindungsgemaesse Vorrichtung befinden kann ist durch Signale in den Leitungen 2, 8 und 15 sowie sowie durch eine durch den Prozessor 11 befolgte Regelcharakteristik gekennzeichnet. Wie das genauer zu verstehen ist, geht aus der nachfolgenden Beschreibung einzelner Betriebszustaende hervor.

Die erfindungsgemaesse Vorrichtung wird ueber die Eingabeeinheit 12, welche entsprechende Eingabemittel wie Tasten, Schalter usw. enthaelt in Betrieb gesetzt. Dabei wird eine bestimmte Drehzahl und Drehrichtung entsprechend +vn eingegeben bzw. koennen diese auch an den Eingaengen 4 und 5 der Regeleinheit 3 und somit auch des Prozessors 11 anliegen. Dabei koennen beliebige Drehzahlen innerhalb der Bereiche 18 und 19 eingegeben werden. Ueber die Leitung 15 wird nun der Leistungsverstaerker 10 vom Prozessor 11 angewiesen, ueber die Leitung 2 volle Leistung an den Elektromotor 1 abzugeben, so dass dessen Drehzahl ausgehend von O gegen +vn ansteigt. Sobald die Drehzahl den Wert 0 verlassen hat, gibt die Tachometereinheit 7 ueber die Leitung 8 ein Signal an das Bandpassfilter 9 ab. Ueblicherweise hat ein drehzahlabhaengiges elektrisches Signal die Dimension einer Frequenz. Dieses elektrische Signal besteht beispielsweise aus einer Sinusschwingung welche mit der genannten Frequenz schwingt. Das Signal hat aber unmittelbar nach der Inbetriebnahme des Elektromotors 1 einen Wert der kleiner ist als die Frequenz, die der Drehzahl +vmin (Fig. 2.) entspricht. Dieses Signal wird somit zunaechst durch das Bandpassfilter 9 herausgefiltert, so dass am Eingang 6 gar kein Signal erscheint. Bezogen auf die Darstellung gemaess Figur 3 befindet sich die Vorrichtung im Zustand 20. Im Prozessor 11 ist eine weitere Zeit T1 vorgegeben und gespeichert, innerhalb welcher die Drehzahl den Wert +vmin mindestens erreicht haben muss, so dass das entsprechende Signal nicht mehr durch das Bandpassfilter herausgefiltert wird und somit die Regeleinheit 3 erreichen kann. Geschieht dies nicht wie vorgesehen in der Zeit T1, so wechselt die Vorrichtung in den Zustand 22 ueber und die Zufuhr von Leistung an den Elektromotor 1 wird unterbrochen wie spaeter noch ausfuehrlicher dargestellt wird. Dies ist in Figur 3 durch einen Pfeil 24 dargestellt. Erreicht die Drehzahl den Wert +vmin innerhalb der Zeit T1, so erscheint ein Signal am Eingang 6 und die Vorrichtung geht ueber in den Zustand 21 gemaess Figur 3. Dies ist durch einen Pfeil 25 angedeutet. In dem, dem Bandpassfilter 9 nachfolgenden, Schmitt-Trigger 33 wird die beispielsweise sinusfoermige Schwingung des Signales in eine Pulsfolge umgewandelt. Somit ist das Signal am Eingang 6 geeignet im digital arbeitenden Prozessor 11 verarbeitet zu werden.

Im Zustand 21 arbeitet die Vorrichtung in an sich bekannter Weise gemaess der Charakteristik eines Vierquadrantenbetriebes. Dabei fuehren Abweichungen von der gewuenschten Drehzahl +vn zu entsprechenden Korrekturen, indem mehr Leistung zugefuehrt wird oder indem kurzzeitig ein Bremsmoment erzeugt wird, was durch Zufuhr einer entgegengesetzt gepolten Leistung erreicht wird. In diesem Zustand erhaelt die Regeleinheit 3 normalerweise immer ein Signal von der Tachometereinheit 7 wie dies durch einen Pfeil 27 in Figur 3 angedeutet ist.

Durch ueberraschende aeussere Einfluesse kann die Drehzahl des Elektromotors 1 soweit veraendert werden, dass das Signal den Bereich 18 verlaesst und somit durch das Bandpassfilter 9 unterdrueckt wird. Dies ist durch den Pfeil 26 angedeutet. Fuer diesen Fall ist im Prozessor 11 eine Zeit T2 vorgegeben und gespeichert, waehrend welcher die Zufuhr von Leistung durch den Leistungsverstaerker 10 unterbrochen wird. Dies ist durch den Zustand 22 dargestellt. Erscheint trotzdem ein Signal am Eingang 6, beispielsweise weil der Motor von aussen angetrieben wird, so wird die Zufuhr von Leistung auch nach abgelaufener Zeit T2 nicht wieder aufgenommen, wie dies durch den Zustand 23 und Pfeile 28 und 29 dargestellt wird. Erscheint am Eingang 6 kein Signal mehr, so kann die Zufuhr von Leistung wieder aufgenommen werden. Die Vorrichtung geht in den Zustand 20 ueber wie mit Pfeilen 30 und 31 angedeutet.

Wird beispielsweise die Drehzahl durch unerwuenschte aeussere Einfluesse umgekehrt, so wechselt die Regeleinheit 3 vom Zustand 21 zunaechst in den Zustand 22, denn ein 0-Durchgang fuer die Drehzahl ist unvermeidbar. Anschliessend erscheint aber trotzdem ein Signal, obwohl keine Leistung abgegeben wird, was bewirkt, dass der Zustand 23 erreicht wird. Dieser wird solange gelten bis die unerwuenschten Einfluesse nachlassen und die Drehzahl den Wert 0 erreicht.

Wird beispielsweise der Elektromotor 1 von aussen angetrieben, so dass er eine Drehzahl erreicht, die groesser ist, als die beispielsweise angestrebte Drehzahl vn und die zudem nicht mehr im Bereiche 18 oder 19 liegt, so muss dem Elektromotor 1 Leistung mit einer Polaritaet zugefuehrt werden, dass er ein Bremsmoment erzeugt. Wird nun das Geraet eingeschaltet, so erscheint am Eingang 4 ein Signal, das die gewuenschte Drehzahl vn angibt. Am Eingang 5 erscheint ein Signal, das die gewuenschte Drehrichtung angibt. Am Eingang 6 erscheint ein Signal, das die aktuelle Drehzahl angibt, nicht, da es ausgefiltert ist. Solange die Zeit T1 nicht abgelaufen ist, erhaelt der Elektromotor 1 eine Leistung zugefuehrt, die ihn weiter beschleunigt. Diese Vorgaenge entsprechen dem Zustand 20 gemaess Figur 3. Da das Tachosignal nach abgelaufener Zeit T1 nicht erscheint, geht die Steuerung in den Zustand 22 ueber. Somit wird die Zufuhr von Leistung unterbrochen. Da auch dann kein Tachosignal erscheint, geht die Steuerung wieder in den Zustand 20 ueber. Dies wiederholt sich solange, bis der Antrieb von aussen entfaellt. Damit wird der Elektromotor vor Ueberhitzung und schliesslich vor seiner Zerstoerung geschuetzt, denn er ist nicht in der Lage gegen diese aeussere Antriebsquelle aufzukommen. Dasselbe geschieht, wenn ein aeusserer Widerstand den Elektromotor 1 daran hindert, innerhalb der Zeit T1 oder ueberhaupt die Drehzahl vmin zu erreichen. Werden die unerwuenschten aeusseren Einfluesse unwirksam, so arbeitet der Elektromotor wieder mit der gewuenschten Drehzahl.

Die Darstellung gemaess Figur 3 gibt somit an, was fuer ein Signal in der Leitung 15 bzw. 2 vorhanden sein muss, wenn bestimmte Signale an den Eingaengen 4, 5 und 6 anliegen. Die Zustaende 20, 21, 22 und 23 geben die Eigenschaften der Signale in den Leitungen 15 und 2 an. Die Pfeile 24 bis 31 geben an, welches Signal am Eingang 6 der Regeleinheit 3 anliegt. Mit diesen gemaess der Erfindung zu bewirkenden Signalkombinationen ist es fuer den Durchschnittsfachmann moeglich eine Regeleinheit so aufzubauen oder einen Prozessor so zu programmieren, dass die genannten Signale in den Leitungen 2 und 15 als Folge der Signale an den Eingaengen 4, 5 (oder im Bus 16) und 6 auftreten.

Der Rueckkopplungspfad 7, 8, 9 mit der Tachometereinheit 7 und mit dem Bandpassfilter 9 kann beispielsweise so ausgebildet sein, dass das Bandpassfilter 9 durch ein Hochpassfilter und ein Tiefpassfilter ersetzt ist. Dies kann notwendig sein, wenn der Durchlassbereich des Bandpassfilters gross sein muss. Es ist aber auch denkbar, dass die Tachometereinheit 7 bereits eine Hochpasscharakteristik aufweist. Dies ist beispielsweise fuer kapazitive Tachometer moeglich. In diesem Falle ist der Tachometer bereits Teil des Bandpassfilters und es muss nur noch ein Tiefpassfilter vorgesehen werden. Die Vorrichtung kann ohne Richtungssignal aus dem Tachometer arbeiten, wenn die gewuenschte Drehzahl in den vorgegebenen Bereichen 18 und 19 liegt. Die lineare Regelung im Vierquadrantenbetrieb arbeitet im Bereiche der Drehzahl 0 nicht und allgemein ausserhalb der Bereiche 18 und 19 auch nicht. Doch sorgt sie dafuer, dass bei Drehzahlen ausserhalb dieser Bereiche 18 und 19 der Elektromotor keinen Schaden nehmen kann.

## Patentansprüche

1. Verfahren zur Regelung der Drehzahl eines Elektromotors, wobei dem Elektromotor (1) variable Leistung zugefuehrt wird und ferner ein Signal ermittelt wird, das eine Groesse aufweist, die proportional zur Drehzahl des Elektromotors (1) ist, zu diesem Signal ein Referenzsignal vorgesehen wird, ein zulaessiger Bereich (18, 19) fuer die Groesse des Signales definiert wird, das Signal laufend mit dem Referenzsignal verglichen wird und die dem Elektromotor zugefuehrte Leistung entsprechend dem Resultat des Vergleiches des Signales mit dem Referenzsignal gesteuert wird, dadurch gekennzeichnet, dass die Leistung entsprechend dem Resultat des Vergleiches dem Elektromotor fuer Vierquadrantenbetrieb solange zugefuehrt wird, als die Groesse des Signales im zulaessigen Bereich (18, 19) liegt, und dass wenn die Groesse des Signales nicht mehr im zulaessigen Bereich (18, 19) liegt, die Zufuhr von Leistung zum Elektromotor auf mindestens einen weiteren Regelungszustand (22,24) umgestellt wird, der waehrend einer vorbestimmten Zeit (T1, T2) gilt, wonach die Regelung erneut dem Resultat des Vergleiches entspricht.

2. Verfahren nach Anspruch 1, dadurch gekennzeichnet, dass in einem weiteren Betriebszustand (22) die Zufuhr von Leistung waehrend einer Zeit (T2) unterbrochen wird.

3. Verfahren nach Anspruch 1, dadurch gekennzeichnet, dass in einem weiteren Betriebszustand (24) die Zufuhr von Leistung waehrend einer Zeit (T1) dem Elektromotor (1) unmittelbar nach dessen Inbetriebnahme zugefuehrt wird, obwohl das Signal eine Groesse aufweist, die nicht im definierten Bereiche (18, 19) liegt.

4. Verfahren nach Anspruch 2, dadurch gekennzeichnet, dass waehrend der Zeit (T2) auch dann keine Leistung dem Elektromotor (1) zugefuehrt wird, wenn ein Signal mit einer Groesse entsteht, die im zulaessigen Bereich (18, 19) liegt.

5. Verfahren nach Anspruch 2, dadurch gekennzeichnet, dass nach der Zeit (T2) dem Elektromotor (1) erneut Leistung zugefuehrt wird.

6. Verfahren gemaess Anspruch 1, dadurch gekennzeichnet, dass ein einziges Signal abgeleitet wird, das proportional zur Drehzahl ist.

7. Vorrichtung zur Regelung eines Elektromotors, mit einer dem Elektromotor (1) vorgeschalteten Regeleinheit (3), mit einem Rueckkopplungspfad (7, 8, 9) zwischen dem Elektromotor (1) und der Regeleinheit (3), mit einer Tachometereinheit (7) fuer ein einziges, von der Bewegung des Elektromotors abgeleitetes Signal und mit einem Bandpassfilter fuer dieses einzige Signal, dadurch gekennzeichnet, dass durch das Bandpassfilter Bereiche (18, 19) fuer die Regelung der Bewegung des Elektromotors im Vierquadrantenbetrieb abgegrenzt sind und dass die Regeleinheit (3) so ausgebildet ist, dass wenn das Signal durch das Bandpassfilter ausgefiltert ist, die Zufuhr von Leistung zum Elektromotor in Abhängigkeit vom Signal durch mindestens einen weiteren vorgegebenen Regelungszustand bestimmt ist, der fuer mindestens eine Zeit (T1, T2) gilt, die in der Regeleinheit gespeichert ist.

8. Vorrichtung gemaess Anspruch 7, dadurch gekennzeichnet, dass die Regeleinheit (3) einen Rechner (13), einen Speicher (14) und einen Leistungsverstaerker (10) fuer Vierquadrantenbetrieb aufweist.

9. Vorrichtung gemaess Anspruch 7, dadurch gekennzeichnet, dass die Regeleinheit (3) einen Prozessor (11) und einen Leistungsverstaerker (10) in Seriechaltung aufweist, fuer einen Elektromotor (3), der im Vierquadrantenbetrieb arbeitet.

10. Vorrichtung gemaess Anspruch 7, dadurch gekennzeichnet, dass die Regeleinheit (3) eine Eingabeeinheit (12) aufweist.

11. Vorrichtung gemaess Anspruch 7, dadurch gekennzeichnet, dass die Regeleinheit (3) einen einzigen Eingang (6) fuer das einzige Signal von der Tachometereinheit (7) sowie je einen Eingang (4 und 5) fuer ein Drehzahlreferenzsignal und ein Richtungsreferenzsignal aufweist.

## Claims

1. A method of regulating the rotational speed of an electric motor (1) whereas a variable power is supplied to the electric motor and a signal is generated having a value which is related to the momentary rotational speed of said electric motor, whereas a reference signal related to said signal is supplied, whereas a predetermined range (18, 19) of acceptable values of said signal is preselected, and whereas said signal is continuously compared with said reference signal and said variable power supplied to the electric motor is regulated according to the results of said comparison of the signal and said reference signal, characterised in that power according to the results of said comparison is supplied to the electric motor for four quadrant mode of operation as long as the value of said signal falls within said predetermined range (18, 19) of acceptable values and in case that the value of the signal does not fall within said predetermined range (18, 19), the supply of power to the electric motor is switched to at least one other state of operation (22, 24) for a predetermined time period (T1, T2) after which the regulating operation is effected again according to the result of said comparison.

2. A method according to claim 1, characterised in that in a further mode of operation (22) the supply of power is interrupted for a time period (T2).

3. A method according to claim 1, characterised in that in an other mode of operation (24) the supply of power to the electric motor (1) is maintained for a time period (T1) after start-up, even if the signal has a value which does not fall within said predetermined range (18, 19).

4. A method according to claim 2, characterised in that no power is supplied to the electric motor (1) for a time period (T2) if a signal is produced whose value falls within the predetermined range (18, 19).

5. A method according to claim 2, characterised in that power is again supplied to the electric motor (1) after a time period (T2).

6. A method according to claim 1, characterised in that one single signal related to the rotational speed is generated.

7. An apparatus for controlling the rotational speed of the electric motor comprising a regulating unit (3) which is series connected to said electric motor (1), comprising a feedback path (7, 8, 9) between the electric motor (1) and the regulating unit (3), comprising a tachometer unit (7) generating one single signal derived from the rotation of the electric motor and comprising a band-pass filter for this single signal, characterised in that the band-pass filter predetermines ranges (18, 19) for regulating the electric motor according to a four quadrant mode of operation and in that the regulating unit (3) is designed in a way to permit supply of power to the electric motor depending on said signal, as long as said signal is suppressed by the band-pass filter, according to at least one further state of operation at least during time periods (T1, T2) stored in the regulating unit.

8. An apparatus according to claim 7, characterised in that said regulating unit (3) containes a processor (13), a storage means (14) and a power amplifier (10) for a four quadrant mode of operation.

9. An apparatus according to claim 7, characterised in that said regulating unit (3) comprises a processor (11) and a power amplifier (10) both series connected in order to thereby produce the four quadrant mode of operation of the electric motor (1).

10. An apparatus according to claim 7, characterised in that the regulating unit (3) comprises an input unit (12).

11. An apparatus according to claim 7, characterised in that the regulating unit (3) contains a single input (6) receiving a single signal originating from said tachometer unit (7) and inputs (4 and 5) for inputting a reference signal related to a rotational speed and a reference signal related to a direction of rotation.

**Revendications**

1. Procédé pour régler le régime d'un moteur électrique (1) alimenté en puissance variable, où un signal dont la valeur est proportionnelle au régime du moteur électrique (1) ainsi qu'un signal de référence qui s'y rapporte sont disponibles, où une plage (18, 19) de valeurs acceptables du signal est définie, où le signal est continuellement comparé au signal de référence et où la puissance du moteur électrique est réglée en fonction du résultat de la comparaison du signal avec le signal de référence, caractérisé en ce que le moteur électrique pour le fonctionnement dans les quatre quadrants est alimenté en fonction du résultat de la comparaison aussi longtemps que la valeur du signal est dans la plage (18, 19) et que l'alimentation du moteur électrique est faite en fonction d'au moins un autre mode d'opération, qui persiste durant un temps (T1, T2) prédeterminé et après lequel le réglage se fait de nouveau en fonction de la comparaison, si la valeur du signal n'est plus dans la plage (18, 19)

2. Méthode selon la revendication 1, caractérisée en ce que dans un autre mode d'opération (22) l'alimentation est interrompue pour une période (T2).

3. Méthode selon la revendication 1, caractérisée en ce que dans un autre mode d'opération (24) l'alimentation du moteur électrique (1) est maintenue durant un temps (T1) après sa mise en marche même si le signal a une valeur qui n'est pas dans la plage (18, 19).

4. Méthode selon la revendication 2, caractérisée en ce que l'alimentation du moteur électrique (1) est coupée durant une période (T2) prédeterminée si un signal est produit qui a une valeur dans la plage (18, 19).

5. Méthode selon la revendication 2, caractérisé en ce que l'alimentation est reprise après une période (T2) prédeterminée.

6. Méthode selon la revendication 1, caractérisé en ce que un seul signal est produit en fonction du régime.

7. Appareil pour régler le régime d'un moteur électrique (1) comprenant une unité de réglage (3) reliée en série à l'entrée du moteur, une boucle de rétroaction (7, 8, 9) placée entre le moteur électrique et l'unité de réglage (3), un tachymètre (7) produisant un seul signal dérivé du mouvement du moteur électrique et un filtre passe-bande pour filtrer ce signal, caractérisé en ce que le filtre passe-bande délimite des plages (18, 19) pour régler le régime du moteur électrique dans les quatre quadrants et en ce que l'unité de réglage (3) est faite de telle manière que, lorsque le signal est éliminé par le filtre, l'alimentation du moteur électrique en fonction du signal est définie par au moins un autre mode d'opération prévu pour au moins un temps (T1, T2) mémorisé dans l'unité de réglage.

8. Appareil selon la revendication 7, caractérisé en ce que l'unité de réglage (3) est composée d'un calculateur (13), d'une mémoire (14) et d'un amplificateur de puissance (10) pour le fonctionnement dans les quatre quadrants.

9. Appareil selon la revendication 7, caractérisé en ce que l'unité de réglage (3) est composée d'un processeur (11) et d'un amplificateur de puissance (10) connectés en série pour le moteur électrique (3) qui fonctionne dans les quatre quadrants.

10. Appareil selon la revendication 7, caractérisé en ce que l'unité de réglage (3) est équipée d'une entrée (12).

11. Appareil selon la revendication 7, caractérisé en ce que l'unité de réglage (3) est équipée d'une seule entrée (6) pour le seul signal venant du tachymètre (7) et d'une entrée (4 et 5) pour un signal de référence de régime et de référence de direction.

Fig. 1

Fig. 2

Fig. 3